# EUROPÄISCHE PATENTSCHRIFT

(11) **EP 1 834 905 B1**
(45) Veröffentlichungstag und Bekanntmachung des Hinweises auf die Patenterteilung: **10.06.2009**
(21) Anmeldenummer: 07104004.2
(22) Anmeldetag: 13.03.2007
(51) Int. Cl.: B65G 27/02, B65G 47/14, B65G 47/256, B21D 22/22

(54) **Fördervorrichtung für Schüttgut**
Conveyor device for bulk material
Dispositif d'acheminement pour produits en vrac

(30) Priorität: 14.03.2006 DE 102006011667
(43) Veröffentlichungstag der Anmeldung: 19.09.2007
(73) Patentinhaber: Burggraf, Alfred, 82278 Althegnenberg (DE)
(72) Erfinder: Burggraf, Alfred, 82278 Althegnenberg (DE)
(74) Vertreter: Schwabe - Sandmair - Marx

(56) Entgegenhaltungen:
- DE-A1- 3 941 886
- DE-A1- 10 351 400
- JP-A- 8 099 709
- JP-A- 55 093 721
- JP-A- 60 209 424
- JP-A- 60 209 425
- JP-A- 2005 343 601
- US-A- 5 036 569

## Beschreibung

Die Erfindung betrifft eine Fördervorrichtung und ein Verfahren zum Fördern einer Vielzahl von Einzelteilen, insbesondere Schüttgut, wobei mit der Vorrichtung und dem Verfahren ungeordnete Einzelteile lagerichtig oder einheitlich ausgerichtet werden können. Solche Vorrichtungen werden auch als Schwingfördereinrichtung oder Schüttgutsortierer bezeichnet.

Schüttgutsortierer finden in einem großen Bereich der Industrie Anwendung, insbesondere für die Sortierung von Produkten, die in großen Stückzahlen hergestellt werden, wie zum Beispiel in der Automobil-, Elektro-, Küchengeräte- oder Verpackungsindustrie (Verpackungen von Tabletten in der Pharmaindustrie). Dazu ist es erforderlich, dass die zu sortierenden bzw. zu ordnenden Teile geordnet bzw. richtig positioniert einem Montagesystem, einer Verpackungsmaschine oder einer weiteren maschinellen Verarbeitung zugeführt werden. Meist ist es erforderlich, dass die in der Regel als Schüttgut vorliegenden Teile in einem quasistationären Teilstrom lagerichtig aus dem Schüttgutsortierer austreten.

Bekannte Sortierbehälter werden durch das Verschweißen von Blechen, die komplexe Zuschnittsgeometrien aufweisen, hergestellt. Die deutsche Auslegeschrift 1 167 261 zeigt einen Vorrats- und Transportbehälter für Vibrationsfördereinrichtungen, der aus einer Gefäßwand und einem damit verbundenen, vorgefertigten Boden besteht. Die Gefäßwand wird von einem Winkelprofilband L-förmigen Querschnitts gebildet, das unter plastischer Verformung in der Form von schraubenförmigen Windungen überlappend gewickelt ist. Die Windungen sind an ihren Überlappungsstellen durch Punktschweißen verbunden.

Die Maß- und Formgenauigkeit solcher Sortierbehälter ist stark von der Qualität und Festigkeit der Schweißnähte abhängig. Die Schweißnähte sind daher mit einer hohen Sorgfalt herzustellen, was die Herstellungskosten erhöht. Da Schweißnähte zugleich eine gewisse Ungleichmäßigkeit bedeuten ist die Eigenfrequenz von Sortierbehälter zu Sortierbehälter unterschiedlich, so dass unter Umständen weitere Veränderungen am Sortierbehälter hinsichtlich Steifigkeit und/oder Massenverteilung vorgenommen werden müssen, um die Eigenfrequenz aus dem Anregungsspektrum der Vibrationsbewegungen zu verschieben. Insbesondere in der pharmazeutischen Industrie sind Schweißnähte hinsichtlich der Verunreinigung des zu fördernden Schüttguts problematisch.

Die deutsche Patentschrift 103 51 400 offenbart einen Sortierbehälter, der mindestens eine Fördereinrichtung aufweist, die sich entlang der Behälterwand erstreckt. Um Schweißnähte und somit Verunreinigungen des zu fördernden Schüttguts zu vermeiden, ist der Sortierbehälter mit einem Druckumformverfahren aus einer Platte geformt. Bei der offenbarten Vorrichtung kann die Fördereinrichtung je nach Verwendungszweck eine so genannte Schikane aufweisen, die das zu sortierende Schüttgut in eine gewünschte Lage ausrichten. Solche Schikanen sind am Ende der Fördereinrichtung angeordnet, wie zum Beispiel die deutsche Gebrauchsmusterschrift 202 08 685 beschreibt.

Aus der JP 60 209424 ist eine Fördereinrichtung bekannt, die in ihren Seitenwänden v-förmig eingeschnittene Vertiefungen aufweist, in denen das zu fördernde Schüttgut transportiert und sortiert wird.

Aus der DE 103 51 400 A1 ist ein Schüttgutsortierer bekannt, der einteilig aus einem plattenförmigen Halbzeug hergestellt ist.

Die JP 08 099709 zeigt eine Schikane, in der lagefalsch ausgerichtete Teile lagerichtig ausgerichtet werden. Die Schikane besteht aus mehreren in einer bestimmten Weise zueinander angeordneten Blechen, die am Fördertopf angeordnet sind.

Die JP 2005 343601 lehrt einen Fördertopf mit mehreren Fördereinrichtungen.

Die US 5,036,569 zeigt eine an einem äußeren Umfang eines Zylinders befestigte Fördereinrichtung.

Bei der in der JP 55 093721 offenbarten Vorrichtung werden lagefalsch ausgerichtete Teile mittels einer Begrenzungsplatte abgestreift.

JP 60 209425 schlägt vor, eine Zuführvorrichtung an einem Fördertopf anzuschrauben.

DE 39 41 886 A1 zeigt am Ende einer Fördereinrichtung an den Fördertopf angesteckte Schikanen.

Aufgabe der Erfindung ist es, eine Fördervorrichtung und ein Verfahren zum Fördern von Schüttgut bereitzustellen, mit denen eine Verunreinigung des zu fördernden Schüttguts verringert werden kann.

Diese Aufgabe wird durch die Merkmale der unabhängigen Ansprüche gelöst. Vorteilhafte Weiterentwicklungen ergeben sich aus den abhängigen Ansprüchen.

Unter Schüttgut wird eine Vielzahl von Einzelteilen verstanden, die in einem ungeordneten, geschütteten Zustand vorliegen. Beispiele von Schüttgut können Schrauben, Nägel, pharmazeutische Erzeugnisse, wie Pillen, Kapseln, Gehäuseverschlüsse, Deckel, Septen oder dergleichen sein. Das Schüttgut kann gleichartige Einzelteile oder mehrere unterschiedliche Arten von Einzelteilen umfassen. Im Schüttgut können insbesondere Einzelteile mit unterschiedlichem Gewicht, Größe, Geometrie oder Material enthalten sein.

Für jede Art von Einzelteil können z. B. eine eigene Fördereinrichtung und z. B. eine angepasste Schikane oder angepasste Schikanen vorgesehen sein.

Vorzugsweise kann die Vorrichtung auch der Sortierung von Schüttgut dienen, wovon auch das Trennen und Aussortieren der Einzelteile des Schüttguts eingeschlossen wird. Ein ursprünglich in einem ungeordneten, geschütteten Zustand vorliegendes Schüttgut kann mit der Vorrichtung oder dem Verfahren unter Bildung kontinuierlicher Teilströme erfindungsgemäß ausgerichtet, getrennt, aussortiert oder lagerichtig zugeführt werden.

Die Schüttgutförderung oder die Schüttgutsortierung wird verursacht durch eine kontinuierliche oder periodisch schwingende Bewegung oder Kraft, die durch entsprechende Antriebsmittel verursacht werden kann, Ebenso ist die Überlagerung von mehrachsigen Schwingungen und/oder kontinuierlichen Translations- oder Rotationsbewegungen möglich. Insbesondere können die einzelnen Teile des Schüttguts durch Mikrowurfbewegungen gefördert werden, die zum Beispiel aus den genannten Bewegungen erzeugt werden.

Die Vorrichtung zum Fördern von Schüttgut weist ein ringförmiges Element auf. Das ringförmige Element kann beispielsweise der Form einer Mantelfläche eines Zylinders, eines Kegels oder eines Kegelstumpfes entsprechen. Ferner kann das ringförmige Element der Mantelfläche eines Paraboloids angenähert sein oder allgemein eine in Achsrichtung gekrümmte Mantelfläche eines Rotationskörpers aufweisen. Insbesondere kann das ringförmige Element ein in etwa flacher Ring sein. Das ringförmige Element kann aus einem plattenförmigen Halbzeug, insbesondere durch Umformen hergestellt sein.

Das ringförmige Element ist mit einem Boden verbunden oder kann den Boden umgeben. Der Boden kann aus einem plattenförmigen Halbzeug, insbesondere durch ein Umformverfahren hergestellt sein. Beispielsweise können das ringförmige Element und der Boden jeweils separat hergestellt werden. Insbesondere können der Boden und das plattenförmige Element mit einem aus dem Stand der Technik bekannten Fügeverfahren zusammengefügt werden. Der Boden und das ringförmige Element sind aus einem einzigen plattenförmigen Element hergestellt, so dass der Boden und das plattenförmige Element einteilig gestaltet sind.

Der Boden dient vorzugsweise als Schüttgutbevorratungsabschnitt, insbesondere dazu, um das ungeordnete, uneinheitlich ausgerichtete Schüttgut aufzunehmen und für eine anschließende Förderung, insbesondere Sortierung zu bevorraten. Insbesondere kann das ringförmige Element, das z. B. als Seitenwand gestaltet ist, den Boden in etwa rotationssymmetrisch umgeben, wobei andere Formen der Seitenwand nicht ausgeschlossen werden. Beispielsweise ist der Boden eben, konkav oder konvex geformt, wobei letzteres bevorzugt wird, um das Schüttgut vom Zentrum des Bodens in Richtung vom Zentrum weg, insbesondere zu mindestens einer Fördereinrichtung zu fördern,

Das ringförmige Element und der Boden können zueinander flach, wie zum Beispiel scheibenförmig, insbesondere in einer Ebene angeordnet sein. In diesem Fall wird eine so genannte Förderscheibe gebildet.

Bevorzugt ist die Vorrichtung topfförmig, wobei der Boden den unteren Teil des Topfes und das ringförmige Element die Seitenwände bilden. Die Seitenwände können relativ zum Boden hochgezogen sein. In diesem Fall wird ein so genannter Fördertopf gebildet.

Die Vorrichtung, insbesondere der Fördertopf oder die Förderscheibe, umfasst mindestens eine Fördereinrichtung, die an dem ringförmigen Element gebildet ist. Die mindestens eine Fördereinrichtung kann alternativ oder zusätzlich am Boden des Behälters gebildet sein. Die mindestens eine Fördereinrichtung weist einen Anfangsabschnitt und einen Endabschnitt auf, zwischen denen sich die Fördereinrichtung erstreckt. Der Anfangs- , abschnitt kann so angeordnet sein, dass am Boden bereitgestelltes Schüttgut über den Anfangsabschnitt an die Fördereinrichtung gelangen kann. Insbesondere kann der Anfangsabschnitt der Fördereinrichtung an den Boden münden. Zum Beispiel können der Boden und das ringförmige Element auch als separate Teile gestaltet sein, die sich in einer zweckmäßigen Anordnung zueinander befinden. Eine zweckmäßige Anordnung kann insbesondere sein, wenn das am Boden bereitgestellte Schüttgut in die mindestens eine Fördereinrichtung gelangen kann.

Der Endabschnitt der mindestens einen Fördereinrichtung kann so angeordnet sein, dass die von der mindestens einen Fördereinrichtung geförderten Einzelteile des Schüttguts die Fördereinrichtung verlassen können. Beispielsweise kann der Endabschnitt an einen Bevorratungsabschnitt münden, der für lagerichtig ausgerichtete Einzelteile des Schüttguts vorgesehen ist. Lagerichtig ausgerichtete Einzelteile sind insbesondere einheitlich ausgerichtet und weisen insbesondere jeweils eine Orientierung auf, die für die Weiterverarbeitung der Einzelteile erforderlich ist. Die geförderten Einzelteile können von der mindestens einen Fördereinrichtung über deren Endabschnitt an oder in den Bevorratungsabschnitt gelangen,

Der Bevorratungsabschnitt kann von der Vorrichtung, insbesondere an dem ringförmigen Element gebildet werden. Alternativ kann der Bevorratungsabschnitt von einem separaten Teil gebildet werden, das sich zum Beispiel an das ringförmige Element, insbesondere den Fördertopf oder die Förderscheibe, am stromabwärtigen Ende der mindestens einen Fördereinrichtung anschließt. Bei einem separaten Bevorratungsabschnitt kann es vorteilhaft sein, den Bevorratungsabschnitt kontaktfrei zum ringförmigen Element anzuordnen, zum Beispiel dann, wenn der Bevorratungsabschnitt einen eigenen Antrieb, insbesondere einen Schwing- oder Vibrationsantrieb, für Mikrowurfbewegungen aufweist. Es kann auch vorteilhaft sein, den Bevorratungsabschnitt mit einer Steck-, Rast- oder Schraubverbindung mit dem ringförmigen Element zu verbinden. Weniger bevorzugt ist die Verbindung mit einer Schweißnaht, aber dennoch möglich.

Die mindestens eine Fördereinrichtung kann sich beispielsweise wendelförmig und/oder spiralförmig an dem ringförmigen Element erstrecken. Insbesondere bei einer scheibenförmigen Anordnung von Boden und ringförmigem Element ist es bevorzugt, dass sich die mindestens eine Fördereinrichtung spiralförmig zwischen ihrem Anfangsabschnitt und ihrem Endabschnitt erstreckt.

Insbesondere bei einer topfförmigen Anordnung von Boden und ringförmigem Element ist es bevorzugt, dass sich die mindestens eine Fördereinrichtung wendelförmig zwischen ihrem Anfangsabschnitt und ihrem Endabschnitt erstreckt. Die Ausbildung der mindestens einen Fördereinrichtung ist auch kombiniert wendel- und spiralförmig möglich, insbesondere bei einem gekrümmten, kegel- oder kegelstumpfförmigen Querschnitt des ringförmigen Elements.

Eine Schikane oder mindestens eine Schikane ist an der mindestens einen Fördereinrichtung zwischen dem Anfangsabschnitt und Endabschnitt, insbesondere an dem ringförmigen Element, angeordnet. Die Schikane kann daher in Förderrichtung zwischen einem nach der Schikane angeordneten Teil der Fördereinrichtung und einem vor der Schikane angeordneten Teil der Fördereinrichtung angeordnet sein. Die Schikane kann insbesondere derart gestaltet sein, dass die die Schikane in Förderrichtung verlassenden Einzelteile des Schüttguts lagerichtig und/oder einheitlich ausgerichtet sind. Die Schikane kann derart gestaltet sein, dass die in die Schikane einlaufenden Einzelteile beim Durchlaufen der Schikane gewendet werden. Dementsprechend können die Einzelteile, welche die Schikane in Förderrichtung verlassen, an dem nach der Schikane angeordneten Teil der Fördereinrichtung weitertransportiert oder gefördert werden.

Abhängig von der Wahrscheinlichkeit der lagerichtigen oder einheitlichen Ausrichtung, mit der die Einzelteile des Schüttguts an die mindestens eine Fördereinrichtung gelangen, werden zum Beispiel an dem Abschnitt der mindestens Fördereinrichtung zwischen dem Anfangsabschnitt und der Schikane, d.h. an dem Teil der Fördereinrichtung vor der Schikane, lagerichtig und lagefalsch, nämlich uneinheitlich ausgerichtete Einzelteile gefördert. Zum Beispiel werden an der mindestens einen Fördereinrichtung in dem Abschnitt zwischen der Schikane und dem Endabschnitt, d.h. an dem Teil der Fördereinrichtung nach der Schikane, nur einheitlich, insbesondere lagerichtig ausgerichtete Einzelteile gefördert.

Insbesondere kann die mindestens eine Fördereinrichtung eine Gesamtlänge, insbesondere zwischen Anfangs- und Endabschnitt, aufweisen. Der Abstand der Schikane entlang der mindestens einen Fördereinrichtung vom Anfangsabschnitt kann geringer sein als die Gesamtlänge. Beispielsweise kann der Abstand der Schikane vom Anfangsabschnitt unter 95 - 90% der Gesamtlänge oder darunter liegen. Die Förderlänge des Teils der Fördereinrichtung vor der Schikane kann größer sein, als der Teil der Fördereinrichtung nach der Schikane. Die Förderlänge des Teils der Fördereinrichtung nach der Schikane soll jedoch größer als null sein. Es wird bevorzugt, die Schikane möglichst zum Anfangsabschnitt hin anzuordnen. Im Gegensatz zum Stand der Technik findet bei der Erfindung die Bildung eines Förderstroms aus einheitlich, insbesondere lagerichtig ausgerichteten Einzelteilen des Schüttguts schon im Bereich der mindestens einen Fördereinrichtung statt. Der Vorteil hierbei ist, dass eine Verunreinigung der Einzelteile beim Fördern gesenkt werden kann.

Die Schikane kann besonders bevorzugt so gestaltet sein, dass lagefalsch in die Schikane einlaufende Einzelteile oder Einzelteile, deren Ausrichtung anders ist als die der aus der Schikane geförderten Einzelteile des Schüttguts aussortiert werden. Vorzugsweise werden nur einheitlich, insbesondere lagerichtig oder lagefalsch, in die Schikane einlaufende Einzelteile durch die Schikane durchgelassen. Das Aussortieren kann beispielsweise durch die Förderbewegung und/oder mittels der Schwerkraft erfolgen, Insbesondere können aussortierte Einzelteile des Schüttguts vor die Schikane beispielsweise in das Schüttgut am Boden zurückgeführt werden. Eine so gestaltete Schikane kann insbesondere als Sortierschikane bezeichnet werden.

Beispielsweise kann es in der pharmazeutischen Industrie erforderlich sein, dass die zu fördernden Einzelteile des Schüttguts nur eine bestimmte zulässige Verunreinigung aufweisen dürfen. Bei der Aussortierung von Einzelteilen unerwünschter Ausrichtung ist es möglich, dass diese Teile mehrfach so in die Fördereinrichtung gelangen, dass sie aussortiert werden, wobei sie bei jedem Durchlauf eine gewisse Menge an Verunreinigung je zurückgelegten Weg aufnehmen. Durch die Anordnung der Schikane zum Beispiel möglichst nahe am Anfangsabschnitt der Fördereinrichtung ist es möglich, den Weg und somit die Verunreinigung des Einzelteils im Gegensatz zu einer Anordnung der Schikane am Endabschnitt - bei gleicher Anzahl an Durchläufen - zu verringern. Mit anderen Worten kann so die Wahrscheinlichkeit wesentlich gesenkt werden, dass ein über die zulässige Verunreinigung verunreinigtes Einzelteil in die Produktionskette gelangt.

Wird beispielsweise der Weg, den ein Einzelteil bis zur Schikane zurücklegen muss, halbiert, wie zum Beispiel bei der Anordnung der Schikane bei 50% des Gesamtlänge der mindestens einen Fördereinrichtung, so dass der Teil der Fördereinrichtung nach der Schikane in etwa so groß ist, wie der Teil der Fördereinrichtung vor der Schikane, dann verdoppelt sich die Anzahl der Durchläufe bis zum Erreichen der maximal zulässigen Verunreinigung des Einzelteils, wobei die Wahrscheinlichkeit im Quadrat zunimmt, dass das Einzelteil bis zum Erreichen der maximal zulässigen Verunreinigung die Schikane in Richtung Endabschnitt passiert. Noch deutlicher wird der Vorteil bei einer Anordnung der Schikane bei 20% der Gesamtlänge, da hierbei die Wahrscheinlichkeit des lagerichtigen Passierens um die Zahl fünf im Exponent zunimmt. Das heißt, dass es vorteilhaft ist, die Schikane so anzuordnen, dass der Teil der Fördereinrichtung nach der Schikane größer ist als der Teil der Fördereinrichtung vor der Schikane.

Eine Schikane, die derart gestaltet ist, dass einlaufende Einzelteile gewendet werden, kann als Wendeschikane bezeichnet werden. Hinsichtlich der Ausbildung, Befestigung und/oder Anordnung der Wendeschikane gilt sinngemäß das gleiche wie für die Sortierschikane, sofern nicht etwas anderes angegeben ist.

In einer besonders bevorzugten Ausführungsform sind eine Sortierschikane und eine Wendeschikane hintereinander angeordnet. Bevorzugt ist die Sortierschikane in Förderrichtung vor der Wendeschikane angeordnet. Somit kann sichergestellt werden, dass in die Wendeschikane lediglich einheitlich ausgerichtete Einzelteile gefördert werden, die in der Wendeschikane lagerichtig gewendet werden. Es ist bevorzugt, dass zwischen zwei Schikanen einheitlich ausgerichtete Einzelteile gefördert werden. Bei mehreren Schikanen kann eine Schikane, insbesondere die Wendeschikane im Bevorratungsabschnitt oder am Endabschnitt der mindestens einen Fördereinrichtung angeordnet sein, wobei bevorzugt ist, dass auch die Wendeschikane zwischen Anfangs- und Endabschnitt angeordnet ist.

Die Schikane kann zum Beispiel mit einer Rast-, Steck- oder Schraubverbindung an der Fördereinrichtung oder dem ringförmigen Element angeordnet sein. Besonders bevorzugt sind die Fördereinrichtung und die Schikane einteilig, wie zum Beispiel aus einem umgeformten Plattenelement gebildet. Weniger bevorzugt, aber durchaus möglich, ist die Anordnung der Schikane an der mindestens einen Fördereinrichtung mittels einer Schweißverbindung oder Schweißnaht. Eine Einheit aus einer mit der Fördereinrichtung einteilig gebildeten Schikane kann beispielsweise mit einer Rast-, Steck- oder Schraubverbindung an der Wand befestigt werden.

Die mindestens eine Fördereinrichtung einschließlich Schikane ist an dem ringförmigen Element oder/und an dem Boden mittels Umformen hergestellt oder kann alternativ durch Trennen oder Urformen hergestellt sein. Die Fördereinrichtung(en) und die Schikane(n) und das ringförmige Element sind einteilig aus einem plattenförmigen Halbzeug, insbesondere Blech, gebildet, Als Material findet Metall, insbesondere Aluminium oder rostfreier Stahl, oder Kunststoff oder ein Verbundwerkstoff, insbesondere ein mit Kunststoff beschichtetes Metall, ein mit Metall beschichteter Kunststoff oder ein Faserverbundwerkstoff, Anwendung.

Ein mögliches Urformverfahren ist beispielsweise Gießen. Ein mögliches Trennverfahren ist beispielsweise Zerspanen, insbesondere Fräsen. Geeignete Umformverfahren sind vorzugsweise Tiefziehen, Innenhochdruckumformen, hydromechanisches Umformen oder superplastisches Umformen, wobei auch eine Kombination von Umformverfahren geeignet ist. Allgemein werden Umformverfahren bevorzugt.

Die mindestens eine Fördereinrichtung und die Schikane(n) weisen einen Laufteil und einen Führungsteil auf, Der Laufteil kann vorzugsweise das zu fördernde Einzelteil aufnehmen, insbesondere so halten, dass die Schwerkraft des Einzelteils im Wesentlichen auf den Laufteil wirkt. Der Laufteil kann hinsichtlich seiner Breite von einem Randabschnitt und insbesondere dem Führungsteil begrenzt sein. Der Führungsteil kann vorzugsweise die Lage, insbesondere des Schwerpunkts eines Einzelteils relativ zu oder entlang einer Breite des Laufteils verändern. Dies kann beispielsweise dadurch geschehen, dass der Führungsteil zu dem Randabschnitt des Laufteils so einen Abstand aufweist, dass eine Haltebedingung oder eine Sortierbedingung erfüllt ist.

Die Haltebedingung besteht darin, dass sich der Schwerpunkt des Einzeltteils im Bereich des Laufteils, insbesondere über dem Laufteil befindet. Die Sortierbedingung besteht darin, dass sich der Schwerpunkt des Einzelteils außerhalb des Bereichs des Laufteils befindet, so dass das Teil vom Laufteil herunterfällt. Es ist bevorzugt, dass die Haltebedingung für lagefalsch und lagerichtig ausgerichtete Einzelteile im Bereich der Fördereinrichtung erfüllt ist. Es ist ferner bevorzugt, dass im Bereich der Sortierschikane die Sortierbedingung für auszusortierende Einzelteile und die Haltebedingung für zu fördernde Einzelteile erfüllt ist. Abhängig von der Gestaltung des Randabschnitts, kann, sofern sich der Schwerpunkt im Bereich des Randabschnitts, insbesondere über dem Randabschnitt befindet, die Haltebedingung oder die Sortierbedingung erfüllt sein. Der Randabschnitt kann beispielsweise als Kante oder als Abrundung gestaltet sein. Dementsprechend ist der Teil des Randabschnitts, in dessen Bereich sich der Schwerpunkt des Einzelteils befindet bei gleichzeitiger Erfüllung der Haltebedingung, noch zu der Lauffläche zu zählen.

Besonders bevorzugt weist der Führungsteil so einen Abstand von dem Randabschnitt auf, dass der Schwerpunkt des zu fördernden Einzelteils sich zwischen Randabschnitt und Führungsteil befindet. Ferner ist es bevorzugt, dass in der Schikane der Führungsteil von dem Randabschnitt so einen Abstand aufweist, dass der Schwerpunkt des zu fördernden Einzelteils sich außerhalb des Führungsteils befindet.

Bevorzugt weist eine Sortierschikane im Vergleich zu der Wendeschikane eine geringere Breite des Laufteils auf. Insbesondere kann bei der Wendeschikane der Laufteil stärker gegen Waagerechte geneigt sein oder der Führungsteil stärker gegen die Senkrechte geneigt sein als bei der Sortierschikane. Ferner kann die Wendeschikane eine stärkere Hinterschneidung aufweisen als die Sortierschikane. Besonders bevorzugt kann der Laufteil eine Führungsvertiefung aufweisen, die z. B. das zu fordernde Einzelteil zumindest teilweise, insbesondere an drei Seiten, umgeben kann.

Erfindungsgemäß geht ein Teil des Laufteils der mindestens einen Fördereinrichtung so, insbesondere mit einer Schraubenform, in den Führungsteil der Schikane über, dass die Einzelteile aufgerichtet werden. Dadurch wird das Einzelteil zum Beispiel für eine Aussortierung oder Wendung vorbereitet. Entsprechend kann ein Teil des Führungsteils der Schikane in den Laufteil der mindestens einen Fördereinrichtung, insbesondere mit einer Schraubenform, übergehen.

Die Vorrichtung kann insbesondere durch ein Umformverfahren hergestellt werden. Die mindestens eine Schikane kann, nachdem zuerst die Spezifikation, insbesondere das Gewicht, die Größe, die Geometrie oder das Material, eines Einzelteils des zu fördernden Schüttguts ermittelt wurde, bei der Herstellung der Vorrichtung an die Spezifikation des Einzelteils angepasst sein. Insbesondere kann die mindestens eine Schikane bereits so bei der Herstellung der Vorrichtung geformt werden, dass eine nachträgliche, individuelle Anpassung an das zu fördernde Einzelteils nicht mehr erforderlich ist. Aus wirtschaftlichen Gesichtspunkten ist es vorteilhaft, die Vorrichtung für eine bestimmte Bandbreite unterschiedlich spezifizierten Schüttguts herzustellen oder vorzukonfektionieren, wobei bevorzugt wird, dass die mindestens eine Schikane durch eine nachträglich und individuell an ein Einzelteil des zu fördernden Schüttguts angepasst wird. Die nachträgliche Anpassung der Vorrichtung kann zum Beispiel durch eine Umformung per Hand, insbesondere mit einem Hammer oder einem anderen Handwerkzeug erfolgen.

Es wird bevorzugt, dass in der Schikane der Abstand des Führungsteils von dem Randabschnitt durch Umformen, insbesondere durch nachträgliches Umformen der vorkonfektionierten Vorrichtung hergestellt ist. Hierzu kann wenigstens ein Entlastungselement vorgesehen sein, das eine Umformung des Führungsteils erleichtert, Beispielsweise kann ein Entlastungselement ein Schnitt, eine Ausnehmung oder dergleichen sein. Das wenigstens eine Entlastungselement kann zum Beispiel in etwa parallel zu der Schikane oder der wenigstens einen Fördereinrichtung verlaufen. Bevorzugt kann zum Beispiel in Schwerkraftrichtung oberhalb und/oder unterhalb des Führungsteils ein Entlastungselement vorgesehen sein. Eine Anordnung des wenigstens einen Entlastungselements seitlich, insbesondere in Förderrichtung vor und hinter der Schikane kann eine vorteilhafte Auführungsform der Erfindung darstellen. Der Führungsteil kann beispielsweise aus der Wand, an der die mindestens eine Fördereinrichtung gebildet ist, herausgeschwenkt, herausgebogen oder lediglich in Richtung des Randabschnitts verformt sein. Insbesondere kann der Führungsteil bandförmig sein.

In einer weiteren bevorzugten Ausführungsform kann die Sortierschikane derart gestaltet sein, dass das oder die auszusortierenden Einzelteile in die oder eine weitere Fördereinrichtung zurückgeführt werden. Beispielsweise kann ein Einzelteil vor die Sortierschikane zurückgeführt werden. Bevorzugt wird das auszusortierende Einzelteil in eine weitere Fördereinrichtung geführt. Die weitere Fördereinrichtung kann relativ zur Sortierschikane so eine Anordnung aufweisen, dass das aussortierte Einzelteil z. B. durch die Schwerkraft in die weitere Fördereinrichtung fällt und vorzugsweise in der weiteren Fördereinrichtung die gleiche Ausrichtung aufweist wie die Einzelteile der mindestens einen Fördereinrichtung nach der Sortierschikane.

Beispielsweise kann die weitere Fördereinrichtung neben der mindestens einen Fördereinrichtung angeordnet sein oder sich daran anschließen. Die weitere Fördereinrichtung kann mit ihrem Anfangsabschnitt in etwa dort beginnen, wo sich die Sortierschikane befindet, so dass nur aussortierte Einzelteile in die weitere Schikane gelangen können. Alternativ kann die weitere Fördereinrichtung mit ihrem Anfangsabschnitt an den Schüttgutbevorratungsabschnitt münden. Der Endabschnitt der weiteren Fördereinrichtung kann nach der Sortierschikane in die mindestens eine Fördereinrichtung oder in den Bevorratungsabschnitt für lagerichtige Einzelteile münden. Sofern eine Wendeschikane an der mindestens einen Fördereinrichtung vorgesehen ist, kann es vorteilhaft sein, dass die weitere Fördereinrichtung vor der Wendeschikane, insbesondere zwischen Wendeschikane und Sortierschikane in die mindestens eine Fördereinrichtung mündet.

Beispielsweise können die mindestens eine Fördereinrichtung und die weitere Fördereinrichtung zumindest abschnittsweise sich gemeinsam an dem ringförmigen Element erstrecken oder daran gebildet sein. Insbesondere können die mindestens eine Fördereinrichtung und die weitere Fördereinrichtung ein Fördereinrichtungspaar bilden. Es kann zum Beispiel bevorzugt sein, dass die weitere Fördereinrichtung, insbesondere zusätzlich zu der mindestens einen Fördereinrichtung, eine Wendeschikane aufweist.

Die weitere Fördereinrichtung kann, wie auch die mindestens eine Fördereinrichtung, einteilig an dem ringförmigen Element gebildet sein oder kann mit einer Steck-, Schraub-, Niet-, Klemm-, Klebe- oder Schweißverbindung an dem ringförmigen Element befestigt sein. Zum Beispiel kann die weitere Fördereinrichtung ein angepasstes plattenförmiges Element sein, das nach dem Herstellungsprozess der Vorrichtung an die Vorrichtung angebracht wird.

Ein weiterer Aspekt der Erfindung betrifft ein Verfahren zum lagerichtigen Ausrichten von Schüttgut, wobei Schüttgut in einer Vorrichtung zum Fördern von Schüttgut vom Anfangsabschnitt an mindestens einer Fördereinrichtung zum Endabschnitt der mindestens einen Fördereinrichtung entlang eines ringförmigen Elements, insbesondere wendelförmig und/oder spiralförmig gefördert wird. Während des Förderns des Schüttguts zwischen dem Anfangsabschnitt und dem Endabschnitt wird das Schüttgut in eine Schikane gefördert, wobei nach der Schikane lediglich einheitlich ausgerichtete Einzelteile des Schüttguts gefordert werden. Vorzugsweise werden nach der Schikane lagerichtig ausgerichtete Einzelteile gefördert, wobei vor der Schikane uneinheitliche oder einheitliche Einzelteile gefördert werden. Vorzugsweise wird in der Schikane aus uneinheitlich ausgerichteten Einzelteilen bestehendes Schüttgut zumindest vereinheitlicht oder lagerichtig ausgerichtet.

Bevorzugt werden diejenigen Einzelteile, deren Ausrichtung nicht der Ausrichtung der Einzelteile nach der Schikane entsprechen, beim Durchlaufen der Schikane von der Schikane aus dem Förderstrom entfernt. In vorteilhaften Ausführungsformen können die insbesondere einheitlich, noch nicht lagerichtig ausgerichteten Einzelteile in eine weitere Schikane gefördert werden. Vorzugsweise werden die einheitlich ausgerichteten Teile in der weiteren Schikane lagerichtig ausgerichtet, insbesondere gewendet, so dass vorzugsweise nur lagerichtig, insbesondere einheitlich ausgerichtete Einzelteile die weitere Schikane verlassen. Vorzugsweise werden die aussortierten Einzelteile in das Schüttgut zum Beispiel vor der mindestens einen Fördereinrichtung zurückgeführt. Insbesondere wird das Verfahren durch die in der hierin beschriebenen Vorrichtung ausgeführten Verfahrensschritte vorteilhaft weitergebildet.

Die Erfindung wird nun anhand von Figuren beschrieben. Die dabei offenkundig werdenden Merkmale bilden je einzeln und in Kombination die Erfindung vorteilhaft weiter. Es zeigen:
- Figur 1: eine Draufsicht auf eine zweiwendelige/zweispiralige, topfförmige Sortiervorrichtung,
- Figur 2: eine Schnittansicht einer Fördereinrichtung entlang des Schnitts A-A aus Figur 1 mit einem lagerichtig ausgerichteten Einzelteil des Schüttguts,
- Figur 3: die Schnittansicht aus Figur 2 mit einem lagefalsch ausgerichteten Einzelteil des Schüttguts,
- Figur 4: eine Schnittansicht einer Schikane entlang des Schnitts B-B aus Figur 1 mit einem Einzelteil des Schüttguts, das so ausgerichtet ist, dass es die Schikane passieren kann,
- Figur 5: die Schnittansicht aus Figur 4 mit einem Einzelteil des Schüttguts, das so ausgerichtet ist, dass es aussortiert wird,
- Figur 6: eine Schnittansicht einer anderen Ausführungsform der Schikane mit einem Einzelteil des Schüttguts, das so ausgerichtet ist, dass es die Schikane passieren kann,
- Figur 7: eine Schnittansicht einer anderen Ausführungsform der Schikane mit einem Einzelteil des Schüttguts, das so ausgerichtet ist, dass es die Schikane passieren kann,
- Figur 8: eine Schnittansicht eines Endabschnitts der Fördereinrichtung entlang des Schnitts C-C mit einem lagerichtig ausgerichteten Einzelteil des Schüttguts,
- Figur 9: eine Schnittansicht einer Wendeschikane entlang des Schnitts D-D mit einem Einzelteil des Schüttguts, das gewendet wird,
- Figur 10: eine Schnittansicht einer Schikane und einer angeschraubten weiteren Fördereinrichtung und
- Figur 11: eine Schnittansicht einer Schikane und weiteren Fördereinrichtungen, die einteilig hergestellt sind.

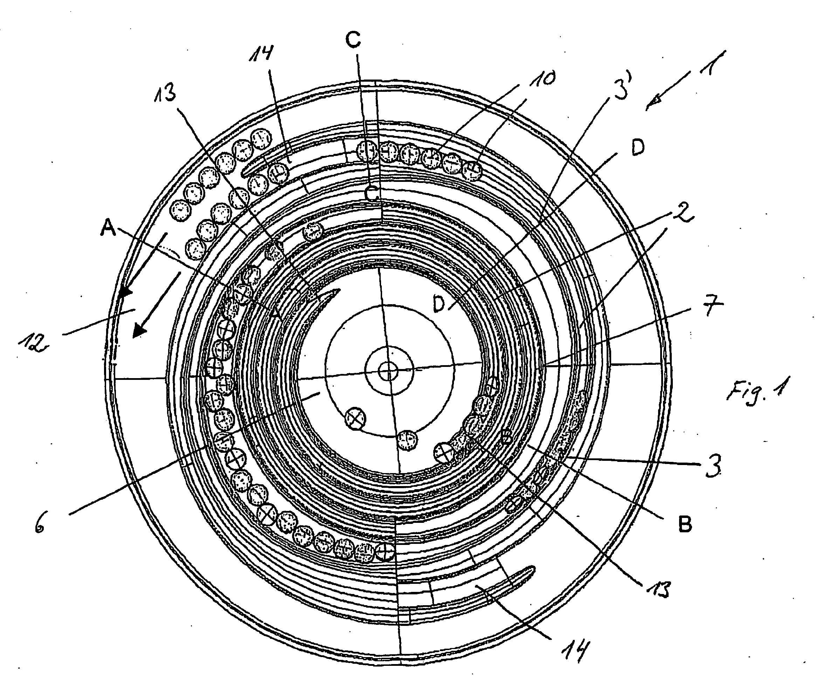

Figur 1 zeigt eine Draufsicht einer topfförmigen Vorrichtung zum Fördern und Ausrichten von Schüttgut 10, wobei die Vorrichtung zwei Fördereinrichtungen 2 aufweist. Die in Figur 1 gezeigte Draufsicht gilt ebenfalls für eine bevorzugte Ausführungsform einer scheibenförmigen Fördereinrichtung. Die Fördereinrichtungen 2 erscheinen in der Ansicht spiralförmig, wobei sie tatsächlich eine Kombination aus spiral- und wendelförmig sind. Die Anfangsabschnitte 13 der zwei Fördereinrichtungen 2 sind diametral gegenüberliegend und münden an einen als Schüttgutbevorratungsabschnitt dienenden Boden 6. Der Boden 6 wird von einem als Seitenwand dienenden ringförmigen Element 7 umgeben, an dem die zwei Fördereinrichtungen 2 ausgebildet sind. Der Boden 6 weist ferner im Bereich seines Zentrums eine hier kreisförmig dargestellte konvexe Erhöhung auf, die das Schüttgut radial weg vom Zentrum in Richtung der Anfangsabschnitte 13 der Fördereinrichtungen 2 transportiert.

Die Fördereinrichtungen 2 münden mit ihren Endabschnitten 14 in einem, hier oberen, Bevorratungsabschnitt 12. Dieser Bevorratungsabschnitt 12 ist für lagerichtig ausgerichtete Einzelteile 10 des Schüttguts vorgesehen und dient zum Beispiel dazu, für den Weitertransport der Einzelteile 10 einen Puffer bereitzustellen. Die lagerichtig ausgerichteten Einzelteile 10 können auf eine einfache Weise von dem Bevorratungsabschnitt 12 entnommen oder zum Beispiel einem Folgeprozess zugeführt werden.

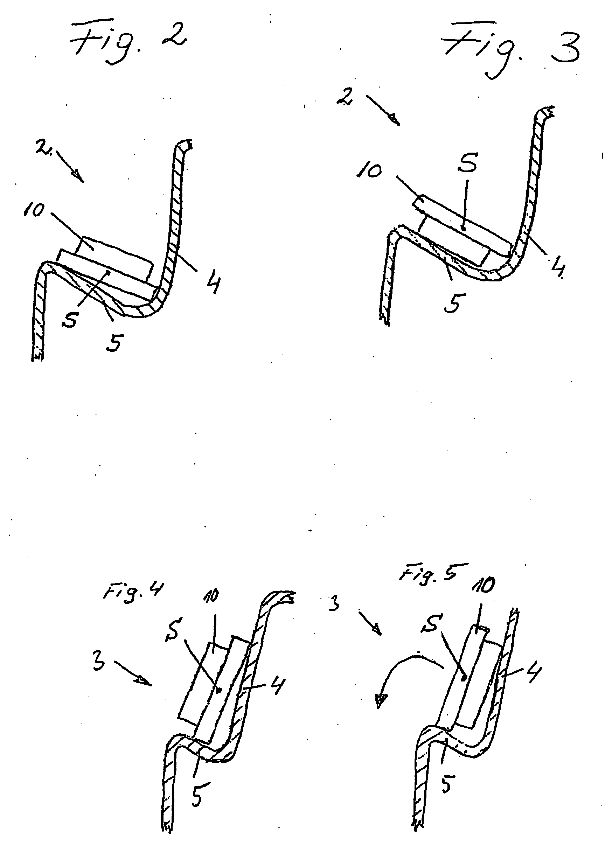

Die zwei Fördereinrichtungen 2 weisen jeweils eine Schikane 3; 3' auf, die in den Figuren 4 bis 7 und 9 näher beschrieben ist. Die Schikanen 3 dienen dazu, um bei lagefalsch an den Fördereinrichtungen 2 zwischen Anfangsabschnitt und Schikane 3 entlanglaufenden Einzelteilen, uneinheitlich, insbesondere die lagefalsch ausgerichteten Einzelteile auszusortieren und dem am Boden 6 befindlichen Schüttgut zuzuführen.

Die Figuren 2 und 3 zeigen einen Abschnitt der Fördereinrichtungen 2 der sich zwischen dem Anfangsabschnitt und der Schikane 3 befindet. Auf der Fördereinrichtung 2 aus Figur 2 ist ein lagerichtig angeordnetes Einzelteil 10 des Schüttguts dargestellt. Auf der Fördereinrichtung 2 aus Figur 3 ist ein beispielhaft lagefalsch ausgerichtetes Einzelteil 10 des Schüttguts dargestellt. Bei dem Einzelteil 10 handelt es sich in diesem Beispiel um einen Verschluss für ein medizinisches Behältnis. Das Einzelteil 10 weist einen Schwerpunkt S auf, der sich anhand der Geometrie und Massenverteilung im Einzelteil 10 ergibt.

Die Fördereinrichtung umfasst einen Führungsteil 4 in der Gestalt einer Führungsfläche und einen Laufteil 5 in der Gestalt einer Lauffläche. Der Laufteil 5 ist gegenüber der Waagerechten zum Führungsteil 4 vorzugsweise geneigt. Der Laufteil 5 dient überwiegend dazu, das Einzeltteil 10 aufzunehmen und beim Transport - hier an seiner Stirnflächeabzustützen. Der Führungsteil 4 dient überwiegend dazu, die Position des Einzelteils 10 hinsichtlich der Breite des Laufteils 5 einzustellen, da sich das Einzelteil 10 mit seiner Umfangsfläche am Führungsteil 4 abstützt. Der Führungsteil 4 weist gegenüber dem Laufteil 5 so eine Position auf, dass der Schwerpunkt S sich im Bereich über dem Laufteil 5 befindet, wodurch das Einzelteil 10 auf der Fördereinrichtung 2, angetrieben von den Mikrowurfbewegungen, in Richtung Schikane 3 gefordert wird.

Während des Förderns des Einzelteils 10 zur Schikane ändert sich die Geometrie der Anordnung aus Führungsteil 4 und Laufteil 5. Insbesondere ändert sich die Neigung und/oder die Breite des Laufteils 4 kontinuierlich, wodurch das Einzelteil 10, unterstützt durch die Mikrowurfbewegungen, aufgerichtet wird und allmählich die in den Figuren 4 und 5 in der Schikane 3 dargestellten Ausrichtungen einnimmt. Der Schwerpunkt S des lagerichtig ausgerichteten Einzelteils 10 aus Figur 4 befindet sich im Vergleich zum Schwerpunkt S des lagefalsch ausgerichteten Einzelteils 10 aus Figur 5 näher an dem Führungsteil 4. Die Anordnung des Führungsteils 4 und des Laufteils 5 der Schikane 3 ist so ausgestaltet, dass nur ein lagerichtig ausgerichtetes Einzelteil 10 sich auf der Lauffläche 5 halten kann. Das lagefalsch ausgerichtete Einzelteil 10 (Figur 5) fällt im weiteren Verlauf der Schikane 3 durch die Schwerkraft, wie mit dem gebogenen Pfeil dargestellt wird, zum Boden 6 bzw. in das Schüttgut zurück. Die in den Figuren 4 und 5 dargestellte Breite des Laufteils 5 verringert sich im weiteren Verlauf der Schikane 3, so dass der Schwerpunkt S sich außerhalb des Laufteils 5, insbesondere auf der von der vom Führungsteil 4 weg weisenden Abrundung befindet, wodurch das lagefalsch ausgerichtete Einzelteil 10 von der Schikane 3 herunterfällt.

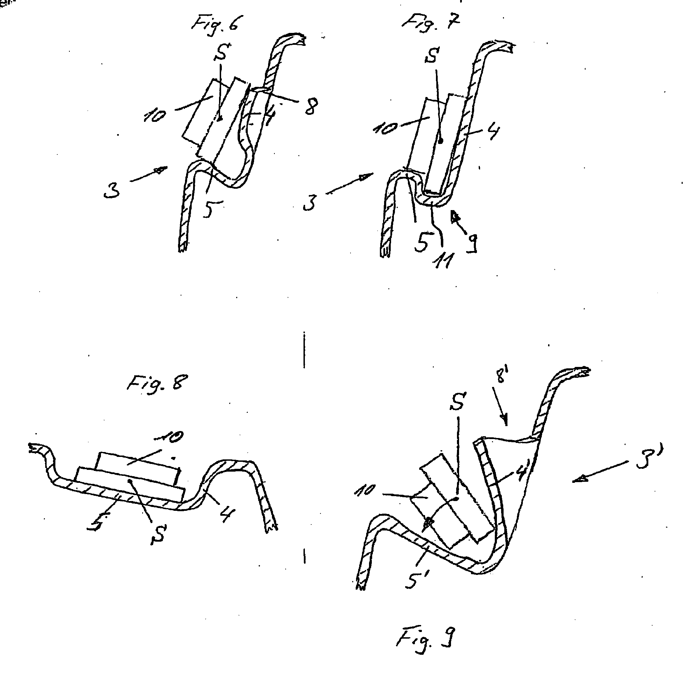

Figur 6 zeigt eine weitere Ausführungsform einer Schikane 3. Da für die Geometrie der Vorrichtung, insbesondere der Schikane 3 die Geometrie und die Massenverteilung des Einzelteils 10 bzw. des Schüttguts maßgeblich ist, ist es besonders vorteilhaft, die Geometrie der Schikane 3 individuell an das Schüttgut anzupassen. Da zum Beispiel bei einem Tiefziehverfahren für unterschiedliche Geometrien der Schikanen 3 unterschiedliche Matrizen benötigt werden, ist es sinnvoll vorkonfektionierte Vorrichtungen, das heißt Vorrichtungen mit einer Standardgröße für Schüttgut eines gewissen Größenbereichs herzustellen, wobei diese Vorrichtungen individuell hinsichtlich der Geometrie und Massenverteilung unterschiedlicher Einzelteile 10 bzw. Schüttgut anzupassen.

Hierzu wird durch ein nachträgliches Umformen der vorkonfektionierten Vorrichtung eine Individualisierung auf eine bestimmte Teileart vorgenommen. Dies kann durch die Umformung des Führungsteils 4 vorgenommen werden. Dazu wird, wie hier dargestellt, der Führungsteil 4 in Richtung der offenen Seite des Laufteils 5 umgeformt. Ebenfalls möglich ist, den Führungsteil 4 entgegen der Richtung der offenen Seite des Laufteils 5 umzuformen. Dadurch kann das Einzelteil 10 und somit auch dessen Schwerpunkt S hinsichtlich der Breite des Laufteils 5, insbesondere in Richtung des offenen Teils des Laufteils 5, verschoben werden. Es kann, wie in Figur 6 dargestellt wird, vorteilhaft sein, ein Entlastungselement 8 zur Umformung des Führungsteils 4 vorzusehen. Das Entlastungselement 8 kann ein einfacher Schnitt oder eine Aussparung sein, der oder die seitlich oder/und oberhalb oder/und unterhalb des umgeformten Teils des Führungsteils 4 angeordnet ist. Dadurch wird ein Umformen des Führungsteils wesentlich erleichtert.

Figur 7 zeigt noch eine weitere Ausführungsform einer Schikane 3. Der Laufteil 5 der Schikane 3 weist eine als Ausbuchtung 9 gestaltete Führungsvertiefung auf, die einen Teil des lagerichtigen Einzelteils 10 umgreift. Somit kann sichergestellt werden, dass ein einheitlich ausgerichtetes Einzelteil 10 sicher die Schikane 3 passieren kann, ohne zum Beispiel durch eine starke Mikrowurfbewegung aus der Schikane 3 aussortiert zu werden. Insbesondere ist diese Ausgestaltung dann besonders vorteilhaft, wenn sich die Lage des Schwerpunkts S des Einzelteils 10 von der lagerichtig ausgerichteten zur lagefalsch ausgerichteten Anordnung nur wenig, sondern vielmehr durch die Geometrie unterscheidet. Ein lagefalsch ausgerichtetes Einzelteil 10 würde nicht von der Ausbuchtung 8 umgriffen werden, wodurch es aussortiert werden würde. Im Übrigen gelten die Ausführungen zu den Figuren 3 und 4 für Figur 7 entsprechend. Insbesondere können die Merkmale der Schikanen 3 aus den Figuren 6 und 7 miteinander kombiniert werden.

Figur 8 zeigt den Teil der Fördereinrichtung 2, der sich zwischen dem Endabschnitt 14 der Fördereinrichtung 2 und der Schikane 3' befindet, In diesem Abschnitt befinden sich bei Durchführung des erfindungsgemäßen Verfahrens lediglich lagerichtig ausgerichtete Einzelteile 10 des Schüttguts. Das Einzelteil 10 liegt mit seiner Stirnfläche auf dem Laufteil 5 auf. Der Laufteil 5 ist im Gegensatz zur Neigung in der Schikane 3 oder in einem stromaufwärtig liegenden Teil der Fördereinrichtung nur wenig gegen die Waagerechte geneigt.

Figur 9 zeigt eine Wendeschikane 3', die in der Vorrichtung aus Figur 1 in Förderrichtung hinter der in den Figuren 4 bis 7 gezeigte Schikane 3, insbesondere Sortierschikane, angeordnet ist, In der Wendeschikane 3' werden die von der Sortierschikane 3 einheitlich ausgerichteten Einzelteile 10 gewendet, In dem gezeigten Beispiel werden die Einzelteile 10 in dem Bevorratungsabschnitt 12 mit der längeren Seite bzw. mit der Seite größeren Durchmessers des Einzelteils 10 nach oben benötigt. Die Sortierschikane 3 hat das Einzelteil 10 einheitlich, jedoch mit der kürzeren Seite bzw, mit der Seite kleineren Durchmessers des Einzelteils 10 nach oben ausgerichtet. In der Wendeschikane 3' werden die Einzelteile 10 gewendet, so dass die Einzelteile 10 mit der längeren Seite bzw. mit der Seite größeren Durchmessers nach oben weisen und somit lagerichtig ausgerichtet sind.

Die Wendeschikane 3' umfasst einen Laufteil 5' und einen Führungsteil 4'. Der Laufteil 5' dient insbesondere dazu, die Gewichtskraft des Einzelteils 10 aufzunehmen. Der Führungsteil 4' dient insbesondere dazu, das Einzelteil 10 soweit aufzurichten oder zu neigen, dass das Einzelteil 10 gewendet wird, wie mit dem Pfeil dargestellt wird. Der Laufteil 5' weist im Gegensatz zum Laufteil 5 der Schikane 3 aus den Figuren 4 bis 7 eine größere Breite auf. Hierdurch wird verhindert, dass das Einzelteil 10 aussortiert wird. Der Führungsteil 4' kann zum Beispiel nachträglich individuell durch Umformen an die Spezifikation des Einzelteils 10 angepasst werden. Hierzu weist das ringförmige Element 7, insbesondere die Seitenwand im Bereich der Wendeschikane 3' ein Entlastungselement 8' auf, um ein individuelles Anpassen zu erleichtern. Für die Ausgestaltung des Entlastungselements 8' wird auf das Entlastungselement 8 der oben beschriebenen Schikane 3 Bezug genommen. Alternativ kann der Führungsteil 4' bereits beim Herstellvorgang der wenigstens einen Fördereinrichtung 2 individuell angepasst werden. Ferner kann alternativ die Wendeschikane 3' ohne ein Entlastungselement 8' hergestellt sein, wobei die erforderlichen Hinterschneidungen mit einem Umformverfahren, insbesondere Druckumformverfahren hergestellt werden können.

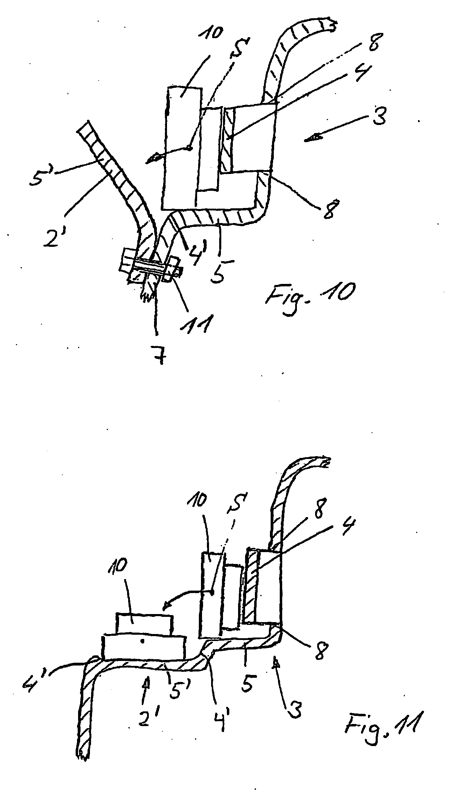

Die in den Figuren 10 und 11 gezeigten Anordnungen können z. B. in Höhe des Schnitts B-B der Vorrichtung aus Figur 1 angeordnet sein. Die Anordnungen weisen jeweils eine Sortierschikane 2 auf, die grundsätzlich so ausgestaltet sein können, wie die hierin beschriebenen Sortierschikanen. Der Führungsteil 4 ist bahnförmig gestaltet, und in Richtung Randabschnitt verformt Um die Verformung des Führungsteils 4 zu erleichtern, weist dieser an seiner Oberkante und an seiner Unterkante jeweils ein Entlastungselement 8 auf. An die Sortierschikane 3 schließt sich eine weitere Fördereinrichtung 2' an.

Bei der in Figur 10 gezeigten Ausführungsform ist die weitere Fördereinrichtung 2' mit dem ringförmigen Element 7 verbunden. Obgleich hier eine Schraubverbindung 11 gezeigt wird, können andere oder weitere kraft-, form- oder stoffschlüssige Verbindungen ebenfalls geeignet sein. Die weitere Fördereinrichtung 2' weist einen Laufteil 5' auf, der in diesem Beispiel zum Laufteil 5 der Sortierschikane in einem stumpfen Winkel angeordnet ist. Ein Einzelteil 10, das aussortiert werden soll, wird von dem Laufteil 4 so weit in Richtung des Randabschnitts gedrückt, dass das Einzelteil 10 von dem Laufteil 5 gegen den Laufteil 5' der weiteren Fördereinrichtung 2' kippt, wie durch den gekrümmten Pfeil dargestellt ist. Der Randabschnitt der Schikane 3 bildet für die weitere Fördereinrichtung 2' einen Führungsteil 4'. Die weitere Fördereinrichtung ist in diesem Beispiel so geformt, dass das auf der weiteren Fördereinrichtung 2' sich befindliche Einzelteil 10 in Förderrichtung nach der Sortierschikane 3 in die Fördereinrichtung, die die Sortierschikane 3 aufweist, geführt wird, Somit wird sichergestellt, dass die Einzelteile 10, die die Sortierschikane 3 passieren können und die Einzelteile 10, die von der Sortierschikane 3 aus dem Förderstrom entfernt werden, die gleiche Ausrichtung aufweisen, so dass sie zu einem gemeinsamen Förderstrom zusammengeführt werden können.

Bei der in Figur 11 gezeigten Ausführungsform weist der Laufteil 5' in etwa die gleiche Neigung zur Waagrechten auf, wie der Laufteil 5. In diesem Beispiel sind die Laufteile 5, 5' sogar parallel. Das an der Sortierschikane 3 gezeigte Einzelteil 10 wird aussortiert und, wie mit dem gekrümmten Pfeil dargestellt wird, gegen den Laufteil 5' der weiteren Fördereinrichtung 2' gekippt. Der Laufteil 5' der weiteren Fördereinrichtung 2' befindet sich in Schwerkraftrichtung etwas unterhalb des Laufteils 5 der Sortierschikane 3. Das Einzelteil 10 wird hinsichtlich der Breite des Laufteils 5' beidseitig von jeweils einem Führungsteil 4' geführt. Im weiteren Verlauf in Förderrichtung wird der Laufteil 5' hinsichtlich seiner Höhe dem Laufteil 5 der Fördereinrichtung, an der die Sortierschikane 3 angeordnet ist, angepasst, wodurch das auf dem Laufteil 5' sich befindliche Einzelteil 10 nach der Sortierschikane 3 in den Förderstrom der auf der Fördereinrichtung 2 befindlichen Einzelteile zugefühlt werden kann. Alternativ können sich die Fördereinrichtung 2 und die Fördereinrichtung 2' bis zur Bevorratungsebene für lagerichtige Einzelteile parallel zueinander erstrecken.

### Bezugszeichenliste

- 1: Fördervorrichtung
- 2: Fördereinrichtung
- 2': weitere Fördereinrichtung
- 3: Schikane, Sortierschikane
- 3': Wendeschikane
- 4: Führungsteil/Führungsfläche
- 4': Führungsteil der weiteren Fördereinrichtung
- 5: Laufteil/Lauffläche
- 5': Laufteil der weiteren Fördereinrichtung
- 6: Schüttgutbevorratungsabschnitt
- 7: ringförmiges Element
- 8: Entlastungselement
- 9: Führungsvertiefung
- 10: Einzelteil
- 11: Schraubverbindung
- 12: Bevorratungsabschnitt für lagerichtige Einzelteile
- 13: Anfangsabschnitt
- 14: Endabschnitt

- S: Schwerpunkt

## Patentansprüche

1. Vorrichtung zum Fördern von Schüttgut, umfassend
a) ein ringförmiges Element (7),
b) einen mit dem ringförmigen Element (7) verbundenen Boden (6),
c) mindestens eine an dem ringförmigen Element (7) gebildete Fördereinrichtung (2) zum Fördern von Einzelteilen (10) des Schüttguts, wobei die mindestens eine Fördereinrichtung (2) einen Anfangsabschnitt (13) und einen Endabschnitt (14) aufweist,
d) eine Schikane (3; 3'), die derart gestaltet ist, dass beim Fördern die die Schikane (3; 3') in Förderrichtung verlassenden Einzelteile (10) einheitlich ausgerichtet sind
e) wobei die mindestens eine Fördereinrichtung (2) und die Schikane (3; 3') einen Laufteil (5) und einen Führungsteil (4) aufweisen, wobei die Schwerkraft eines zu fördernden Einzelteils auf den Laufteil (5) wirkt,
f) wobei der Boden (6), das ringförmige Element (7), die mindestens eine Fördereinrichtung (2) und die Schikane (3; 3') einteilig durch Umformen eines plattenförmigen Halbzeugs hergestellt sind,
**dadurch gekennzeichnet,**
g) **dass** die Schikane (3; 3') an der mindestens einen Fördereinrichtung (2) zwischen dem Anfangsabschnitt (13) und dem Endabschnitt (14) angeordnet ist, und
h) **dass** ein Teil des Laufteils (5) der mindestens einen Fördereinrichtung (2) so in den Führungsteil (4) der Schikane (3; 3') übergeht, dass das Einzelteil beim Fördern aufgerichtet wird.

2. Vorrichtung nach dem vorhergehenden Anspruch, wobei die Schikane (3; 3') derart gestaltet ist, dass beim Fördern die die Schikane (3; 3') in Förderrichtung verlassenden Einzelteile (10) des Schüttguts lagerichtig ausgerichtet sind.

3. Vorrichtung nach einem der vorhergehenden Ansprüche, wobei die mindestens eine Fördereinrichtung (2) sich wendelförmig und/oder spiralförmig an dem ringförmigen Element (7) erstreckt.

4. Vorrichtung nach einem der vorhergehenden Ansprüche, wobei die Vorrichtung (1) in etwa scheibenförmig gestaltet ist.

5. Vorrichtung nach einem der Ansprüche 1 bis 3, wobei die Vorrichtung (1) in etwa topfförmig ist.

6. Vorrichtung nach einem der vorhergehenden Ansprüche, wobei die Schikane (3) so gestaltet ist, dass die in die Schikane (3) einlaufenden Einzelteile (10), die eine andere Ausrichtung aufweisen, wie die aus der Schikane (3) geförderten Einzelteile (10), aussortiert, insbesondere mittels der Schwerkraft in das Schüttgut vor der Schikane (3) zurückgeführt oder in eine weitere Fördereinrichtung (2') geführt werden.

7. Vorrichtung nach einem der vorhergehenden Ansprüche, wobei die Schikane (3') so gestaltet ist, dass in die Schikane (3') einlaufende Einzelteile (10), vorzugsweise alle in die Schikane (3') einlaufenden Einzelteile (10) gewendet werden.

8. Vorrichtung nach einem der vorhergehenden Ansprüche, wobei die Vorrichtung eine Schikane (3) nach Anspruch 6 aufweist und in Förderrichtung hinter dieser Schikane (3) eine Schikane (3') nach Anspruch 7 nachgeschaltet oder angeordnet ist.

9. Vorrichtung nach einem der vorhergehenden Ansprüche, wobei der Führungsteil (4) die Lage, insbesondere des Schwerpunkts (S), der Einzelteile (10) relativ zu einer Breite des Laufteils (5) verändert.

10. Vorrichtung nach dem vorhergehenden Anspruch, wobei in der mindestens einen Fördereinrichtung (2) der Laufteil (5) von einem Randabschnitt begrenzt ist, wobei der Führungsteil (4) so einen Abstand von dem Randabschnitt aufweist, dass der Schwerpunkt (S) eines Einzelteils (10) sich zwischen Randabschnitt und Führungsteil (4) befindet.

11. Vorrichtung nach einem der zwei vorhergehenden Ansprüche, wobei in der Schikane (3) der Laufteil (5) von einem Randabschnitt begrenzt wird, wobei der Führungsteil (4) so einen Abstand von dem Randabschnitt aufweist, dass der Schwerpunkt (S) eines auszusortierenden Einzelteils (10) sich außerhalb des Laufteils (5) befindet.

12. Vorrichtung nach einem der drei vorhergehenden Ansprüche, wobei der Laufteil (5), insbesondere der Schikane (3; 3') oder der mindestens einen Fördereinrichtung (2), eine Führungsvertiefung (11) für ein Einzelteil (10) aufweist,

13. Vorrichtung nach einem der vier vorhergehenden Ansprüche, wobei der Abstand des Führungsteils (4) von dem Randabschnitt durch Umformen, insbesondere durch nachträgliches Umformen einer vorkonfektionierten Vorrichtung hergestellt ist.

14. Vorrichtung nach einem der fünf vorhergehenden Ansprüche, wobei ein Entlastungselement (8) vorgesehen ist, das eine Umformung des Führungsteils (4) erleichtert.

15. Vorrichtung nach einem der vorhergehenden Ansprüche, ferner umfassend einen Schüttgutbevorratungsabschnitt (6), der insbesondere konvex gewölbt ist, so dass Schüttgut vom Zentrum zum Anfangsabschnitt (13) gefördert wird.

16. Vorrichtung nach einem der vorhergehenden Ansprüche, wobei ein Schüttgutbevorratungsabschnitt (6) für Schüttgut in ungeordneten Ausrichtungen und ein Bevorratungsabschnitt (12) für lagerichtig ausgerichtete Einzelteile (10) vorgesehen sind, wobei die mindestens eine Fördereinrichtung (2) den Schüttgutbevorratungsabschnitt (6) und den Bevorratungsabschnitt (12) für lagerichtig ausgerichtete Einzelteile (10) verbindet,

17. Vorrichtung nach einem der vorhergehenden Ansprüche, wobei eine weitere Fördereinrichtung (2') vorgesehen ist, die an dem ringförmigen Element (7) angeordnet ist und/oder in die von einer Sortierschikane (2) aussortierte Einzelteile (10) geführt werden.

18. Vorrichtung nach dem vorhergehenden Anspruch, wobei die weitere Fördereinrichtung (2') in Förderrichtung in etwa auf Höhe der Sortierschikane (3) beginnt.

19. Vorrichtung nach einem der zwei vorhergehenden Ansprüche, wobei die weitere Fördereinrichtung (2') in die Fördereinrichtung (2), insbesondere vor einer Wendeschikane (3'), oder in einen Bevorratungsabschnitt (12) für lagerichtig ausgerichtete Einzelteile (10) des Schüttguts mündet.

20. Verfahren zum lagerichtigen Ausrichten von Schüttgut, wobei die Einzelteile des Schüttguts in einer Vorrichtung (1) zum Fördern von Schüttgut von einem Anfangsabschnitt (13) mindestens einer Fördereinrichtung (2) zum Endabschnitt (14) der mindestens einen Fördereinrichtung (2) entlang eines ringförmigen Elements (7), insbesondere wendelförmig und/oder spiralförmig, gefördert werden, wobei während des Förderns zwischen dem Anfangsabschnitt (13) und dem Endabschnitt (14) die Einzelteile (10) in wenigstens einer Schikane (3; 3') dadurch einheitlich und/oder lagerichtig ausgerichtet werden, dass die Einzelteile, die mit ihrer Schwerkraft auf einen Laufteil (5) der mindestens einen Fördereinrichtung (2) und der Schikane (3; 3') wirken, beim Fördern aufgerichtet werden, indem ein Teil des Laufteils (5) der mindestens einen Fördereinrichtung (2) in einem Führungsteil (4) der Schikane übergeht.

21. Verfahren nach dem vorhergehenden Anspruch, wobei lagefalsch ausgerichtete Einzelteile (10) von der Schikane (3) aus dem Förderstrom entfernt werden,

22. Verfahren nach einem der zwei vorhergehenden Ansprüche, wobei die Einzelteile (10) von der oder einer weiteren Schikane (3') gewendet werden.

## Claims

1. Device for conveying bulk material, comprising
a) an annular element (7),
b) a base (6) connected to the annular element (7),
c) at least one conveyor device (2) disposed on the annular element (7) for conveying discrete parts (10) of the bulk material, the at least one conveyor device (2) having an initial portion (13) and an end portion (14),
d) a baffle (3; 3') designed so that the discrete parts (10) leaving the baffle (3; 3') in the conveying direction are uniformly oriented as they are conveyed,
e) and the at least one conveyor device (2) and the baffle (3; 3') have a runner part (5) and a guide part (4) and the gravitational force of a discrete part to be conveyed acts on the runner part (5),
f) and the base (6), the annular element (7), the at least one conveyor device (2) and the baffle (3, 3') are manufactured integrally by forming a panel-shaped semi-finished product,
**characterised in that**
g) the baffle (3; 3') is disposed on the at least one conveyor device (2) between the initial portion (13) and the end portion (14), and
h) a part of the runner part (5) of the at least one conveyor device (2) merges into the guide part (4) of the baffle (3; 3') in such a way that the discrete part is placed upright.

2. Device as claimed in the preceding claim, in which the baffle (3; 3') is designed so that the discrete parts (10) of the bulk material leaving the baffle (3; 3') are oriented in the correct position.

3. Device as claimed in one of the preceding claims, in which the at least one conveyor device (2) extends along the annular element (7) in a helical shape and/or spiral shape.

4. Device as claimed in one of the preceding claims, in which the device (1) is of a more or less disc-shaped design.

5. Device as claimed in one of claims 1 to 3, in which the device (1) is approximately pot-shaped.

6. Device as claimed in one of the preceding claims, in which the baffle (3) is designed so that discrete parts (10) moving into the baffle (3) in an orientation that is different from that of discrete parts (10) conveyed out of the baffle (3) are separated out, in particular are fed back into the bulk material upstream of the baffle (3) by means of gravitational force or are directed to another conveyor device (2').

7. Device as claimed in one of the preceding claims, in which the baffle (3') is designed so that discrete parts (10) moving into the baffle (3'), preferably all of the discrete parts (10) moving into the baffle (3'), are turned.

8. Device as claimed in one of the preceding claims, in which the device has a baffle (3) as claimed in claim 6 and a baffle (3') as claimed in claim 7 adjoins or is disposed after this baffle (3), downstream in the conveying direction.

9. Device as claimed in one of the preceding claims, in which the guide part (4) changes the position, in particular the centre of gravity (S), of the discrete parts (10) relative to a width of the runner part (5).

10. Device as claimed in the preceding claim, in which the runner part (5) in the at least one conveyor device (2) is bounded by a peripheral portion, and the guide part (4) is disposed at a distance from the peripheral portion so that the centre of gravity (S) of a discrete part (10) is disposed between the peripheral portion and guide part (4).

11. Device as claimed in one of the two preceding claims, in which the runner part (5) in the baffle (3) is bounded by a peripheral portion, and the guide part (4) is disposed at a distance from the peripheral portion so that the centre of gravity (S) of a discrete part (10) to be separated out is disposed outside of the runner part (5).

12. Device as claimed in one of the three preceding claims, in which the runner part (5), in particular the baffle (3; 3') or the at least one conveyor device (2), has a guide recess (11) for a discrete part (10).

13. Device as claimed in one of the four preceding claims, in which the distance of the guide part (4) from the peripheral portion is produced by forming, in particular additionally forming, a pre-fabricated device.

14. Device as claimed in one of the five preceding claims, in which a pressure-relieving element (8) is provided, which facilitates the process of forming the guide part (4).

15. Device as claimed in one of the preceding claims, further comprising a bulk material feeder portion (6) which is convexly curved in particular so that the bulk material is conveyed from the centre to the initial portion (13).

16. Device as claimed in one of the preceding claims, in which a bulk material feeder portion (6) is provided for bulk material in random orientations and a feeder portion (12) is provided for discrete parts (10) oriented in the correct position, and the at least one conveyor device (2) links the bulk material feeder portion (6) and the feeder portion (12) for discrete parts (10) oriented in the correct position.

17. Device as claimed in one of the preceding claims, in which another conveyor device (2') is provided, which is disposed on the annular element and/or into which discrete parts (10) separated out by a sorter baffle (2) are directed.

18. Device as claimed in the preceding claim, in which the other conveyor device (2') starts more or less on a level with the sorter baffle (3) in the conveying direction.

19. Device as claimed in one of the two preceding claims, in which the other conveyor device (2') opens into the conveyor device (2), in particular upstream of a turning baffle (3'), or into a feeder portion (12) for discrete parts (10) of the bulk material oriented in the correct position.

20. Method of orienting bulk material in the correct position, whereby the discrete parts of the bulk material are conveyed in a device (1) for conveying bulk material from an initial portion (13) of at least one conveyor device (2) to the end portion (14) of the at least one conveyor device (2) along an annular element (7), in particular in a helical shape and/or spiral shape, and as they are conveyed between the initial portion (13) and the end portion (14), the discrete parts (10) are oriented uniformly and/or in the correct position in and by means of a baffle (3; 3'), and the discrete parts which act on a runner part (5) of the at least one conveyor device (2) and the baffle (3; 3') due to their gravitational force are placed upright as they are conveyed by means of a part of the runner part (5) of the at least one conveyor device (2) which merges into a guide part (4) of the baffle.

21. Method as claimed in the preceding claim, whereby discrete parts (10) oriented in the wrong position are removed from the conveyor flow by the baffle (3).

22. Method as claimed in one of the two preceding claims, whereby the discrete parts (10) are turned by the or by another baffle (3').

## Revendications

1. Dispositif pour le transport d'un produit en vrac, comportant
a) un élément de forme annulaire (7),
b) un fond (6) relié à l'élément (7) de forme annulaire,
c) au moins un dispositif de transport (2) formé sur l'élément (7) de forme annulaire pour le transport de pièces détachées (10) du produit en vrac, le au moins un dispositif de transport (2) comportant un segment initial (13) et un segment terminal (14),
d) une chicane (3 ; 3') qui est conçue de manière que lors du transport les pièces détachées (10), quittant la chicane (3 ; 3') dans le sens du transport, soient orientées de la même façon,
e) le au moins un dispositif de transport (2) et la chicane (3 ; 3') comportant un élément en circulation (5) et un élément de guidage (4), la force de gravité d'une pièce détachée à transporter agissant sur l'élément en circulation (5),
f) le fond (6), l'élément (7) de forme annulaire, le au moins un dispositif de transport (2) et la chicane (3 ; 3') étant fabriqués d'une seule pièce par déformation d'un semi-produit en forme de plaque,
**caractérisé en ce que**
g) la chicane (3 ; 3') sur le au moins un dispositif de transport (2) est disposée entre le segment initial (13) et le segment terminal (14) et,
h) **en ce qu'**une partie de l'élément en circulation (5) du au moins un dispositif de transport (2) se prolonge dans l'élément de guidage (4) de la chicane (3 ; 3') de manière que la pièce détachée soit orientée lors du transport.

2. Dispositif selon la revendication 1, dans lequel la chicane (3 ; 3') est conçue de manière que lors du transport les pièces détachées (10) du produit en vrac quittant la chicane (3 ; 3') dans le sens du transport soient orientées dans une position correcte.

3. Dispositif selon l'une quelconque des revendications 1 ou 2, dans lequel le au moins un dispositif de transport (2) s'étend en hélice et/ou en spirale sur l'élément (7) de forme annulaire.

4. Dispositif selon l'une quelconque des revendications 1 à 3, dans lequel le dispositif (1) présente sensiblement la forme d'un disque.

5. Dispositif selon l'une quelconque des revendications 1 à 3, dans lequel le dispositif (1) a sensiblement la forme d'un pot.

6. Dispositif selon l'une quelconque des revendications 1 à 5, dans lequel la chicane (3) est conçue de manière que les pièces détachées (10) entrant dans la chicane (3), qui présentent une autre orientation que celle des pièces détachées (10) transportées depuis la chicane (3), soient éliminées par tri, en particulier soient renvoyées au moyen de la force de gravité dans le produit en vrac en amont de la chicane (3), ou soient guidées dans un autre dispositif de transport (2').

7. Dispositif selon l'une quelconque des revendications 1 à 6, dans lequel la chicane (3') est conçue de manière que des pièces détachées (10) entrant dans la chicane (3'), de préférence toutes les pièces détachées (10) entrant dans la chicane (3'), soient retournées.

8. Dispositif selon l'une quelconque des revendications 1 à 7, dans lequel le dispositif comporte une chicane (3) selon la revendication 6 et derrière cette chicane (3), dans le sens du transport, est couplée ou disposée une chicane (3') selon la revendication 7.

9. Dispositif selon l'une quelconque des revendications 1 à 8, dans lequel l'élément de guidage (4) modifie la position, en particulier le centre de gravité (S), des pièces détachées (10), par rapport à une largeur de l'élément en circulation (5).

10. Dispositif selon la revendication 9, dans lequel dans le au moins un dispositif de transport (2), l'élément en circulation (5) est limité par un segment de bordure, dans lequel l'élément de guidage (4) présente une distance par rapport au segment de bordure telle que le centre de gravité (S) d'une pièce détachée (10) se trouve entre le segment de bordure et l'élément de guidage (4).

11. Dispositif selon l'une quelconque des revendications 9 et 10, dans lequel dans la chicane (3) l'élément en circulation (5) est délimité par un segment de bordure, dans lequel l'élément de guidage (4) présente une distance par rapport au segment de bordure telle que le centre de gravité (S) d'une pièce détachée (10) à éliminer par tri, se trouve à l'extérieur de l'élément en circulation (5).

12. Dispositif selon l'une quelconque des revendications 9, 10 ou 11, dans lequel l'élément en circulation (5), en particulier la chicane (3 ; 3') ou le au moins un dispositif de transport (2), présente un renfoncement de guidage (11) pour une pièce détachée (10).

13. Dispositif selon l'une quelconque des revendications 9, 10, 11 ou 12, dans lequel la distance de l'élément de guidage (4) par rapport au segment de bordure est réalisée par déformation, en particulier par déformation ultérieure d'un dispositif préconfectionné.

14. Dispositif selon l'une quelconque des revendications 9, 10, 11, 12 ou 13, dans lequel il est prévu un élément de décharge (8) qui facilite une déformation de l'élément de guidage (4).

15. Dispositif selon l'une quelconque des revendications 1 à 14, comprenant en outre un segment de réserve de produit en vrac (6) qui est en particulier convexe, ce qui fait que le produit en vrac est transporté du centre vers le segment initial (13).

16. Dispositif selon l'une quelconque des revendications 1 à 15, dans lequel il est prévu un segment de réserve de produit en vrac (6) pour le produit en vrac dans des orientations non ordonnées et un segment de réserve (12) pour des pièces détachées (10) correctement orientées, dans lequel le au moins un dispositif de transport (2) relie le segment de réserve de produit en vrac (6) et le segment de réserve (12) pour des pièces détachées (10) correctement orientées.

17. Dispositif selon l'une quelconque des revendications 1 à 16, dans lequel il est prévu un autre dispositif de transport (2') qui est disposé sur l'élément (7) de forme annulaire et/ou dans lequel sont guidées des pièces détachées (10) éliminées par tri d'une chicane de tri (2).

18. Dispositif selon la revendication 17, dans lequel l'autre dispositif de transport (2') commence dans le sens du transport à peu près à hauteur de la chicane de tri (3).

19. Dispositif selon l'une quelconque des revendications 17 ou 18, dans lequel l'autre dispositif de transport (2') débouche dans le dispositif de transport (2) en particulier en amont d'une chicane de retournement (3'), ou dans un segment de réserve (12) pour des pièces détachées (10) orientées correctement du produit en vrac.

20. Procédé pour l'orientation correcte d'un produit en vrac, dans lequel les pièces détachées du produit en vrac sont transportées dans un dispositif (1) pour le transport de produit en vrac depuis un segment initial (13) d'au moins un dispositif de transport (2) vers le segment terminal (14) du au moins un dispositif de transport (2), le long d'un élément (7) de forme annulaire, en particulier en forme d'hélice et/ou de spirale, dans lequel pendant le transport entre le segment initial (13) et le segment terminal (14), les pièces détachées (10) sont orientées dans au moins une chicane (3 ; 3') de la même façon et/ou dans une position correcte, du fait que les pièces détachées, qui agissent par leur force de gravité sur un élément en circulation (5) du au moins un dispositif de transport (2) et de la chicane (3 ; 3'), sont orientées lors du transport, en ce qu'une partie de l'élément en circulation (5) du au moins un dispositif de transport (2) se prolonge dans un élément de guidage (4) de la chicane.

21. Procédé selon la revendication 20, dans lequel des pièces détachées (10) orientées dans une mauvaise position sont éliminées par la chicane (3) du courant de transport.

22. Procédé selon l'une quelconque des revendications 20 ou 21, dans lequel les pièces détachées (10) sont retournées par la chicane ou une autre chicane (3').
